(19) Europäisches Patentamt
European Patent Office
Office européen des brevets

(11) EP 3 336 140 B1

(12) **EUROPEAN PATENT SPECIFICATION**

(45) Date of publication and mention of the grant of the patent:
**24.07.2019 Bulletin 2019/30**

(21) Application number: **17208226.5**

(22) Date of filing: **18.12.2017**

(51) Int Cl.:
***C08L 9/00*** (2006.01) ***C08L 7/00*** (2006.01)
***B29B 15/10*** (2006.01) ***B29D 30/38*** (2006.01)
***B29C 59/14*** (2006.01) ***B60C 9/00*** (2006.01)
***C08J 5/04*** (2006.01) ***C08J 5/06*** (2006.01)
***D07B 1/06*** (2006.01) ***B05D 7/20*** (2006.01)
***B05D 1/00*** (2006.01) ***B29B 15/08*** (2006.01)

(54) **ATMOSPHERIC PLASMA TREATMENT OF REINFORCEMENT CORDS AND USE IN RUBBER ARTICLES**

ATMOSPHÄRISCHE PLASMABEHANDLUNG VON VERSTÄRKUNGSCORD UND VERWENDUNG IN GUMMIARTIKELN

TRAITEMENT AU PLASMA ATMOSPHÉRIQUE DE CORDONS DE RENFORT ET UTILISATION DANS DES ARTICLES EN CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2016 US 201662435910 P**

(43) Date of publication of application:
**20.06.2018 Bulletin 2018/25**

(73) Proprietor: **The Goodyear Tire & Rubber Company**
**Akron, OH 44316 (US)**

(72) Inventors:
- **SIFFER, Frederic Gerard Auguste**
**L-5861 Fentange (LU)**
- **HOBELMAN, Jerome Bernard**
**Sullivan, OH Ohio 44880 (US)**
- **GILLICK, James Gregory**
**Akron, OH Ohio 44313 (US)**
- **GERSMAN, Michael Lawrence**
**Akron, OH Ohio 44311 (US)**
- **CHANDRA, Dinesh**
**Hudson, OH Ohio 44236 (US)**
- **QU, Dan**
**Lyndhurst, OH Ohio 44124 (US)**
- **BOTTS, Bina Patel**
**Cuyahoga Falls, OH Ohio 44223 (US)**

(74) Representative: **Kutsch, Bernd**
**Goodyear S.A.**
**Patent Department**
**Avenue Gordon Smith**
**7750 Colmar-Berg (LU)**

(56) References cited:
**EP-A1- 2 371 882**
**EP-A1- 2 716 694**
**EP-A1- 2 716 695**
**EP-A2- 2 431 195**
**US-A- 5 283 119**

- **H. M. KANG ET AL: "Enhanced adhesion of aramid tire cords via argon plasma etching and acetylene plasma polymerization", JOURNAL OF ADHESION SCIENCE AND TECHNOLOGY, vol. 20, no. 11, 5 April 2006 (2006-04-05) , pages 1155-1169, XP055465965, GB ISSN: 0169-4243, DOI: 10.1163/156856106777920802**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Background

Rubber is typically reinforced with various embodiments of textile, glass or steel fibers to provide basic strength, shape, stability, and resistance to bruises, fatigue, and heat. These fibers may be twisted into plies and cabled into cords. Rubber tires of various construction as well as various industrial products such as belts, hoses, seals, bumpers, mountings, and diaphragms can be prepared using such cords.

Manufacturers of rubber reinforced articles have long realized the importance of the interfacial adhesion of reinforcement of its rubber environment. Specialized coatings such are resorcinol/formaldehyde latex adhesives for polymeric cords and brass plating for steel cords are typically applied to fiber and wire reinforcements to enable them to function effectively for tire use. In addition, the compounds used to coat these reinforcements are usually specially formulated to develop adhesion. For example, many tire manufacturers use various cobalt salts as bonding promoters in their steel cord wire coats, as well as using relatively high ratios of sulfur to cure accelerator. The bonding promoters are added through compounding. To achieve a maximum bonding strength, an excess amount of cobalt salt is often added to the wire coat. Since only a very small portion of the cobalt salt may be engaged in the rubber-metal interfacial bonding reaction, most of the cobalt salts remained in the compound as excess cobalt without any contribution to the bonding. Cobalt is expensive and may even cause aging problems of the rubber when used in excess, as well as having objectionable environmental effects.

It continuously remains desirable to improve adhesion of reinforcement cords to rubber while simultaneously improving the properties of the coat compounds and reducing their cost.

### Summary of the invention

The invention relates to a method in accordance with claim 1, to a reinforcement cord in accordance with claim 11 and to a reinforced rubber or elastomer article in accordance with claim 13.

Dependent claims refer to preferred embodiments of the invention.

In one aspect, the present invention is directed to a method of making a cord-reinforced rubber article, comprising the steps of

a) mixing a carrier gas, sulfur and an alkyne, to form a gas mixture;
b) generating an atmospheric pressure plasma from the gas mixture;
c) exposing a reinforcement cord to the atmospheric pressure plasma to produce a treated reinforcement cord; and
d) contacting the treated reinforcement cord with a rubber composition comprising a diene based elastomer.

The invention is further directed to cord reinforced rubber articles made by the method.

### Brief description of the drawings

The sole drawing is a schematic representation of one embodiment of the present invention.

### Detailed description of example embodiments of the invention

There is disclosed a method of making a cord-reinforced rubber article, comprising the steps of

a) mixing a carrier gas, sulfur and an alkyne, to form a gas mixture;
b) generating an atmospheric pressure plasma from the gas mixture;
b) exposing a reinforcement cord to the atmospheric pressure plasma to produce a treated reinforcement cord; and
d) contacting the treated reinforcement cord with a rubber composition comprising a diene based elastomer.

With reference now to the drawing, one embodiment of a method of treating a reinforcement cord according to the present invention is illustrated. In the process 10, a carrier gas 18 from a storage vessel 12 is directed to enter a vaporizer vessel 14 wherein the carrier gas 18 mixes with vaporized sulfur to form a sulfur/carrier gas stream 15. Then, the carrier gas 19, the sulfur/carrier gas stream 15 and acetylene 17 from a storage vessel 16 are mixed in-line to form gas mixture 21. The gas mixture 21 is sent to a plasma generator 22, where an atmospheric plasma 24 is generated from the gas mixture 21. A reinforcement cord 26 is unwound from a spool 30 and conveyed through the plasma generator 22 and the atmospheric plasma 24 for deposition of a surface treatment by the plasma 24 onto the reinforcement cord 23 forming a treated reinforcement cord 28. The treated reinforcement cord 28 exits the plasma generator 22 and the

is wound onto a spool 32 for storage.

The plasma generator may be any suitable plasma generation device as are known in the art to generate atmospheric pressure plasmas, such as atmospheric pressure plasma jet, atmospheric pressure microwave glow discharge, atmospheric pressure glow discharge, and atmospheric dielectric barrier discharge. In one embodiment, the plasma generator is of the dielectric barrier discharge type. The dielectric barrier discharge apparatus generally includes two electrodes with a dielectric-insulating layer disposed between the electrodes and operate at about atmospheric pressures. The dielectric barrier discharge apparatus does not provide one single plasma discharge, but instead provides a series of short-lived, self-terminating arcs, which on a long-time scale (greater than a microsecond), appears as a stable, continuous, and homogeneous plasma. The dielectric layer serves to ensure termination of the arc. Further reference is made to US-B-6,664,737 for its teaching regarding the operation of a dielectric barrier discharge apparatus. Suitable configurations for treatment of substrates using atmospheric plasmas are known, for example, in US-B-9,255,330 and US-B-8,927,052 and US-A-2010/0028561, US-A-2009/0148615, and US-A-2007/0202270.

By atmospheric pressure plasma, it is meant that the pressure of the plasma is equal to or slightly above the ambient pressure of the surroundings. The pressure of the plasma may be somewhat higher than ambient, such that the plasma pressure is sufficient to induce the desired flow rate through the atomizer and plasma generator.

The gas mixture includes a carrier gas, sulfur and an alkyne.

Preferred suitable alkynes are C2 to C10 alkynes such as acetylene, propyne, 1-butyne, 2-butyne, 1-pentyne, 2-pentyne, 3-methylbut-1-yne, 1-hexyne, 2-hexyne, 3-hexyne, 3,3-dimethylbut-1-yne, 1-heptyne and isomers, 1-octyne and isomers, 1-nonyne and isomers, and 1-decyne and isomers. In a preferred embodiment, the alkyne is acetylene.

In a preferred embodiment, sulfur is introduced in the form of a vaporized elemental sulfur. The vaporization process for sulfur may consist of a heated vessel with heat generation sufficient to melt and vaporize the elemental sulfur. In one embodiment, the vaporized sulfur may be swept from the heated vessel using carrier gas identical to that used in the plasma generator, for example, by bubbling carrier gas such as argon through the molten sulfur in the heated chamber and carry vaporized sulfur through an exit port in the heated chamber. The vaporized sulfur/argon stream is then directed to the plasma chamber, along with the acetylene and carrier gas.

Suitable carrier gas includes any of the noble gases including helium, argon, xenon, and neon. Also, suitable as carrier gas are nitrogen, carbon dioxide, nitrous oxide, carbon monoxide, and air. In a preferred embodiment, the carrier gas is argon.

The gas mixture includes the carrier gas mixed with the vaporized sulfur and also includes the pure carrier gas mixed with the sulfur/carrier gas and alkyne.

In a preferred embodiment, the sulfur and alkyne are present as (sulfur + alkyne)/carrier gas in a range of from 0.1 to 5 percent by volume (of carrier gas). In a more preferred embodiment, the sulfur and alkyne are present as (sulfur + alkyne)/carrier gas in a range of from 0.1 to 1 percent by volume (of carrier gas).

In a preferred embodiment, sulfur and alkyne are present in a volume ratio sulfur/alkyne in a range of 0.01 to 0.1.

The tire cord is constructed of any of the various reinforcement materials commonly used in tires. In one embodiment, the tire cord includes steel and polymeric cords. Polymeric cords may include any of the various textile cords as are known in the art, including but not limited to cords constructed from polyamide, polyester, polyketone, rayon, and polyaramid. In one embodiment, the reinforcement cord includes steel, galvanized steel, zinc plated steel and brass plated steel.

The reinforcement cord is exposed to the atmospheric plasma for a time sufficient to deposit an adhesively effective amount of polymerized or partially polymerized sulfur and/or alkyne onto the cord surface. By adhesively effective amount, it is meant that the treated cord will show increased adhesion to a cured rubber compound compared to an untreated cord, as measured by a standard adhesion test such as ASTM Standard D2229-73. Generally, the exposure time required will depend on the concentration of sulfur and alkyne in the atomized mixture, the flow rate of atomized mixture into the plasma generator, and the power input to the plasma generator. For a batch process wherein stationary cord is exposed to an atmospheric plasma, the cord is exposed for from 1 to 100 seconds. In a continuous process, the exposure time may be characterized by a residence time expressed as the cord path length (e.g., in centimeters) through the plasma generator divided by the cord transit rate (e.g., in cm/sec). The residence time in such a continuous process would then range from 1 to 100 seconds.

The flow rate of atomized mixture into the plasma generator necessary to obtain an adhesively effective amount of polymerized or partially polymerized sulfur and alkyne onto the cord surface will depend on the desired face velocity in the plasma generator, i.e., the gas velocity (e.g., in cm/sec) passing perpendicular to a characteristic internal cross-sectional area of the plasma generator. Necessary flow rate may be determined by one skilled in the art without undue experimentation.

The atmospheric pressure plasma treated cord may be used in a component of a pneumatic tire. The treated cord is calendered or otherwise contacted with a rubber composition to form the tire component using procedures as are known in the art. In various embodiments, the tire component may be a belt, carcass, apex, bead, chipper, flipper, or any other component including a cord reinforcement as are known in the art. In one embodiment, the tire component

is a steel belt wherein treated steel reinforcement cords are calendared into a rubber composition.

The rubber composition to be contacted with the treated reinforcement cord includes one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis 1,4 polybutadiene), polyisoprene (including cis 1,4 polyisoprene), butyl rubber, halobutyl rubber such as chlorobutyl rubber or bromobutyl rubber, styrene/isoprene/butadiene rubber, copolymers of 1,3 butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxysilyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

The rubber composition to be contacted with the treated reinforcement cord may include at least one of methylene donors and methylene acceptors.

In one embodiment, the methylene donor is an N-substituted oxymethylmelamines, of the general formula:

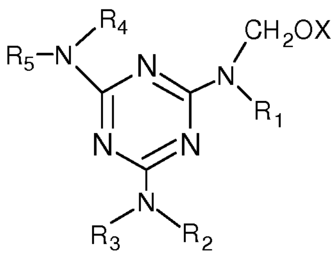

wherein X is hydrogen or an alkyl having from 1 to 8 carbon atoms, $R_1$, $R_2$, $R_3$, $R_4$ and $R_5$ are individually selected from the group consisting of hydrogen, an alkyl having from 1 to 8 carbon atoms, the group $-CH_2OX$ or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine, N,N'N"-tributyl-N,N',N"-trimethylol-melamine, hexamethoxymethylmelamine, and hexaethoxymethylmelamine. In one embodiment, the N-substituted oxymethylmelamine is hexamethoxymethylmelamine. The N-methylol derivatives of melamine are prepared by known methods.

The amount of N-substituted oxymethylmelamine in the rubber composition may vary. In one embodiment, the amount of N-substituted oxymethylmelamine ranges from 0.5 to 4 phr. In another embodiment, the amount of N-substituted oxymethylmelamine ranges from 1 to 3 phr. The N-substituted oxymethylmelamine may be added as the free compound, or dispersed on a carrier medium such as silica.

In one embodiment, the rubber composition includes a methylene acceptor. The term "methylene acceptor" is known to those skilled in the art and is used to describe the reactant to which a methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, resorcinol novolak resins and mixtures thereof. Examples of methylene acceptors include those disclosed in US-A-6,605,670; US-A-6,541,551; US-A-6,472,457; US-A-5,945,500; US-A-5,936,056; US-A-5,688,871; US-A-5,665,799; US-A-5,504,127; US-A-5,405,897; US-A-5,244,725; US-A-5,206,289; US-A-5,194,513; US-A-5,030,692; US-A-4,889,481; US-A-4,605,696; US-A-4,436,853; and US-A-4,092,455. Examples of modified phenol novolak resins include cashew nut oil modified phenol novolak resin, tall oil modified phenol novolak resin and alkyl modified phenol novolak resin. In one embodiment, the methylene acceptor is resorcinol.

Other examples of methylene acceptors include activated phenols by ring substitution and a cashew nut oil modified novolak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc. under the designation SP6700. The modification rate of oil based on total novolak-type phenolic resin may range from 10 to 50 percent. For production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The amount of methylene acceptor in the rubber stock may vary. In one embodiment, the amount of methylene acceptor, if used, ranges from 0.5 to 5 phr. In another embodiment, the amount of methylene acceptor, if used, ranges from 1 to 3 phr.

In one embodiment, the rubber composition excludes a methylene acceptor. In one embodiment, the rubber composition excludes resorcinol.

It is readily understood by those having skill in the art that the rubber compositions used in tire components would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives. In one embodiment, the addition of carbon black comprises 10 to 200 parts by weight of diene rubber (phr). In another embodiment, from 20 to about 100 phr of carbon black is used.

A number of commercially available carbon blacks may be used. Included in the list of carbon blacks are those known under the ASTM designations N299, N315, N326, N330, N332, N339, N343, N347, N351, N358, N375, N539, N550 and N582.

processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 5 to 100 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to 3 phr. Typical amounts of zinc oxide comprise 1 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include insoluble sulfur, elemental sulfur (free sulfur) or sulfur donating vulcanizing agents, for example, an amine disulfide, polymeric polysulfide or sulfur olefin adducts. In one embodiment, the sulfur vulcanizing agent is elemental sulfur. In one embodiment, sulfur vulcanizing agents are used in an amount ranging from 0.5 to 8 phr. In another embodiment 3 to 5 phr of sulfur vulcanizing agents are used.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators may be used, including a primary accelerator which is generally used in the larger amount (0.5 to 2.0 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. In another embodiment, if a second accelerator is used, the secondary accelerator may be a guanidine, dithiocarbamate, thiuram, or a second sulfenamide.

The tire containing the tire component can be built, shaped, molded and cured by various methods which will

be readily apparent to those having skill in such art.

The prepared tire of this invention is conventionally shaped and cured by methods known to those having skill in such art.

While the invention as described herein has been directed to tire cords and tires, the method is not so limited. Other applications of reinforcement cords, which includes tire cords, as treated by the methods described herein can be envisioned. Any rubber or elastomer article of manufacture reinforced with reinforcement cords can utilize cords as treated by the methods described herein. For example, applications of the treated reinforcement cords using the plasma methods described herein include reinforced hoses, transmission belts, drive belts, air springs, conveyor belts, drive tracks, and the like. Thus, the methods as described herein as suitable for treatment of tire cords are equally applicable to the treatment of any reinforcement cord as used in reinforced rubber or elastomer articles of manufacture.

The invention is further described with reference to the following examples.

**Example 1**

In this example, the effect of using elemental sulfur and acetylene in an atmospheric plasma to coat steel reinforcement cords is illustrated. A laboratory dielectric barrier discharge apparatus was constructed consisting of a quartz tube with aluminum tape electrodes wrapped at a spaced interval on the exterior of the tube, with a first electrode connected to a high voltage power supply and a second electrode grounded. Argon gas at atmospheric pressure mixed with vaporized sulfur and acetylene was passed through the interior of the quartz tube. A steel tire cord of 3+5x7x0.15 galvanized construction was extended through the interior of the quartz tube and held stationary. Application of high voltage to the first electrode ignited a plasma in the quartz tube.

The process was modified to enable the vaporization of high-boiling chemicals into the plasma reactor without vapor condensation.

The sulfur vaporization process consisted of an aluminum heating mantle (evaporator) into which a Pyrex vial containing elemental sulfur was inserted. The Pyrex vial was equipped with a side port for the injection of a gentle stream of argon carrier gas to push the vaporized chemical into the plasma reactor tube. The aluminum mantle was wrapped with heating wire connected to a dual-channel temperature controller. The temperature was steadily controlled via a thermocouple inserted in a well drilled in the sidewall of the evaporator. Temperatures up to 350 °C could be reached in the vial. The use of an aluminum well had the advantage of lowering the temperature gradient applied to the glass as well as to create thermal inertia to help stabilize the temperature.

The Pyrex vial was made based on the principle of a bubbler. The argon gas stream into the vial was directed towards the bottom of the vial via a capillary plunger tube. Due to the high temperatures, quartz was also considered as a material to custom-make the vial but successful heating trials on a Pyrex vial were conclusive.

Additionally, to prevent high-temperature vapors from condensing in the main reactor tube, a second independently- controlled heating zone was placed on the tubular reactor, almost up to the plasma zone. To prevent arcing between the high voltage and the heating wire, the section of the heating zone closest to the plasma was wrapped with insulating polyimide tape. The temperature of the second heating zone was set 10 °C higher compared to the vial temperature to prevent condensation. The temperature of this second heating zone was controlled via a thermocouple inserted between the heating wire and the tubular reactor.

Argon and acetylene were introduced in the tubular reactor and traveled through the heated section of the tubular reactor (2nd zone). Further dilution of the sulfur vapor in the blend of acetylene and argon occurred before reaching the plasma zone.

A series of experiments exposing a steel cord to a plasma was performed, using various power input to electrode, various exposure times of the steel cord to the plasma, and various argon gas flow rates into the quartz tube. The resulting plasma treated steel cords were embedded to a depth of 19 mm into a standard rubber wirecoat compound for passenger tires and cured at 155 ºC for 35 minutes. Each cured wire/rubber sample was then tested for adhesion using a tire cord adhesion test (TCAT) following procedures given in Nicholson et al, Tire Science and Technology, TSTCA, Vol. 6, No. 2, May 1978, pp. 114-124. The results of these pull-out tests (TCAT) and percent rubber coverage are given in Table 1.

Initial screening experiments were conducted using elemental sulfur. Hyosung zinc-plated 4+3x0.35 UT steel cord was used for this study. The wire was used as received without further cleaning. Plasma coated wires were directly cured in a tire cord adhesion test (TCAT) geometry (1/2", 35 min @ 310 Fahrenheit or 154.4 Celsius) using cobalt-free rubber wirecoat compounds to measure pull-out forces and rubber coverages. Results are from an average of four pulls. The elemental sulfur was purchased from Sigma-Aldrich with a purity of 99.5-100%.

Fixed parameters:

- Plasma frequency of 54 kHz
- Main Argon gas flow rate of 4.5 l/min
- Precursor: Elemental Sulfur
- Acetylene flow rate of 40 ml/min
- Diameter of the tubular reactor of 4/6 mm ID/OD
- Electrode length of 2"
- Wire centered in the tubular reactor

Variable parameters:

- Argon gas flow rate through the sulfur vaporization vial
- Wire wind-up speed
- Plasma power
- Evaporator temperature

Table 1 below presents plasma processing conditions as well as rubber adhesion data for this initial set of experiments.

The data of Table 1 was analyzed using SAS JMP statistical analysis software to determine the parameters that have the most influence on adhesion. The model below shows a strong correlation between adhesion and line speed and predicts an optimum around 5.5 V for the wind-up voltage. Indeed, the grafting of the coating to the zinc, most likely through initial zinc sulfidation as well as the coating thickness depend on the line speed. The model also predicts a strong correlation between the Argon gas flow through the vial and the evaporator temperature, indicating the importance of the amount of sulfur vapor introduced into the plasma reactor. An optimum in sulfur vapor concentration may depend on the total Argon gas flow rate through the reactor. Surprisingly, the plasma power was found to have no influence on the resulting adhesion to the plasma coated wire.

**Table 1**

| Experiment | TCAT Pull-out Force (N) | Pull-out force StdDev (N) | Rubber Coverage (%) | Pull-out energy (J) | Pull-out energy StdDev (J) | Argon flow rate through vial (L/min) | Wind-up voltage (V) | Plasma Power (W) | Evaporator temperature (degrees C) |
|---|---|---|---|---|---|---|---|---|---|
| 1 | 51 | 4 | 0 | 0.14 | 0.05 | 0.40 | 2.5 | 60 | 250 |
| 2 | 51 | 1 | 0 | 0.19 | 0.03 | 0.40 | 2.5 | 60 | 275 |
| 3 | 68 | 14 | 0 | 0.23 | 0.04 | 0.40 | 2.5 | 60 | 300 |
| 4 | 241 | 11 | 62 | 4.36 | 0.51 | 0.40 | 7.9 | 40 | 250 |
| 5 | 285 | 8 | 65 | 6.17 | 0.39 | 0.40 | 4.5 | 40 | 250 |
| 6 | 212 | 14 | 42 | 3.25 | 0.57 | 0.20 | 7.9 | 40 | 250 |
| 7 | 235 | 7 | 52 | 3.71 | 0.32 | 0.20 | 7.9 | 60 | 250 |
| 8 | 237 | 12 | 65 | 3.92 | 0.23 | 0.20 | 7.9 | 60 | 275 |
| 9 | 221 | 15 | 42 | 3.49 | 0.56 | 0.20 | 7.9 | 40 | 275 |
| 10 | 293 | 13 | 65 | 6.23 | 0.66 | 0.20 | 4.5 | 40 | 275 |
| 11 | 229 | 9 | 45 | 3.93 | 0.37 | 0.20 | 7.9 | 40 | 300 |
| 12 | 317 | 7 | 78 | 7.63 | 0.79 | 0.20 | 4.5 | 40 | 300 |
| 13 | 248 | 3 | 48 | 4.76 | 0.35 | 0.20 | 7.9 | 60 | 300 |
| 14 | 253 | 18 | 48 | 5.1 | 0.72 | 0.20 | 4.5 | 40 | 300 |
| 15 | 170 | 5 | 0 | 1.95 | 0.12 | 0.40 | 4.5 | 60 | 300 |
| 16 | 221 | 18 | 12 | 3.27 | 0.66 | 0.40 | 4.5 | 40 | 300 |
| 17 | 180 | 18 | 6 | 2.05 | 0.56 | 0.40 | 3.2 | 40 | 300 |
| 18 | 182 | 2 | 10 | 2.04 | 0.01 | 0.40 | 3.2 | 60 | 300 |
| 19 | 180 | 8 | 40 | 1.95 | 0.16 | 0.60 | 3.2 | 60 | 300 |
| 20 | 207 | 12 | 30 | 2.73 | 0.39 | 0.60 | 3.2 | 40 | 300 |
| 21 | 297 | 28 | 50 | 7.2 | 1.11 | 0.60 | 4.5 | 40 | 300 |
| 22 | 284 | 17 | 60 | 7.02 | 1.38 | 0.60 | 4.5 | 60 | 300 |
| 23 | 370 | 12 | 88 | 9.48 | 0.35 | 0.20 | 4.5 | 40 | 300 |
| 24 | 308 | 31 | 68 | 6.93 | 1.32 | 0.40 | 4.5 | 40 | 300 |
| 25 | 267 | 17 | 52 | 5.11 | 0.65 | 0.60 | 4.5 | 40 | 300 |
| 27 | 243 | 22 | 30 | 4.31 | 1.09 | 1.00 | 4.5 | 40 | 300 |
| exp 23- 15min overcure | 336 | 29 | 82 | 8.7 | 1.78 | 0.20 | 4.5 | 40 | 300 |
| exp 24- 15min overcure | 270 | 9 | 52 | 5.64 | 0.43 | 0.40 | 4.5 | 40 | 300 |
| exp 25- 15min overcure | 270 | 12 | 42 | 5.43 | 0.31 | 0.60 | 4.5 | 40 | 300 |
| exp 27- 15min overcure | 222 | 14 | 18 | 3.62 | 0.64 | 1.00 | 4.5 | 40 | 300 |

## Example 2

In this example, the quantification of sulfur vapor output into the tubular reactor is illustrated.

As data of the above Table 1 indicate a strong correlation between the argon flow rate through the vial and the evaporator temperature, it was desired to determine the quantity of sulfur vapor delivered to the plasma zone and determine how to control this flow of vapor. For this calculation, the heated vial containing the sulfur was assimilated to a bubbler.

Assuming all gases to be ideal, the mole fractions of sulfur vapor and argon carrier gas have the same ratio as their partial pressures. Additionally, the partial pressure of the argon carrier gas is assumed equal to the difference between the pressure in the bubbler headspace (1 atmosphere) and the equilibrium pressure of the vapor.

From the ideal gas law, Cv = Pv / Pt and also Cv = Qv / (Qc + Qv) when taking into account the flow rates with:

Cv = Precursor vapor concentration in the gas flow exiting the bubbler
Pv = Partial vapor pressure of the precursor at a given temperature
Pt = Total pressure in the bubbler (760 torr)
Qv = Flow rate of precursor vapor exiting the bubbler
Qc = Flow rate of carrier gas through the bubbler

The flow rate of sulfur vapors exiting the bubbler can then be deducted by combining both above equations:

$$Qv = Qc \times Pv / (Pt-Pv)$$

The vapor pressure of elemental sulfur at different temperatures was found from West et al.

Table 2 provides an approximation of calculated sulfur vapor flow exiting the vial for different temperatures and argon carrier gas flow rates. Results in Table 5 highlight the importance of the correlation between temperature and argon flow rate through the vial. It can be concluded that a control over the amount of sulfur vapor injected into the reactor can be achieved by tuning the temperature and argon flow rate.

**Table 2**

| Temperature (Celsius) | Sulfur vapor pressure (Torr) | Argon flow rate (sccm) | Calculated Sulfur vapor flow output (sccm) |
|---|---|---|---|
| 250 | 13 | 200 | 3.5 |
| 250 | 13 | 1000 | 17.4 |
| 275 | 24 | 200 | 6.5 |
| 275 | 24 | 1000 | 32.6 |
| 300 | 48.7 | 200 | 13.7 |
| 300 | 48.7 | 1000 | 68.5 |

1 Torr = 133.33 Pascal

**Example 3**

To further develop the plasma coating process for elemental sulfur/acetylene, a definitive screening design was performed. This type of design was chosen to limit the number of experiments to run as well as to avoid confounding of effects since this system features at least an active two-factor interaction between the evaporator temperature and argon gas flow rate through the vial.

Fixed parameters:

- Plasma frequency of 54 kHz
- Plasma Power of 20 W
- Precursor: elemental sulfur
- Evaporator temperature of 300 °C
- Argon gas flow rate through the vial of 0.2 l/min

- Diameter of the tubular reactor of 4/6 mm ID/OD
- Electrode length of 2"
- Wire centered in the tubular reactor - wire diameter of about 1.3 mm

Variable parameters:

- Wire wind-up speed
- Acetylene flow rate
- Main argon gas flow rate

The following experimental conditions were used for this Design of Experiments: Hyosung Zinc-plated 4+3x0.35 UT steel cord was used as received without further cleaning. Plasma coated wires were directly cured in a tire cord adhesion test (TCAT) geometry (1/2", 35 min @ 310 F or 154.4 Celsius) using cobalt-free compound 1 as well as cobalt-free compound 2 to measure pull-out forces and rubber coverages. Four TCAT samples were cured and pulled for each experiment.

Table 3 below presents the generated data as well as the corresponding TCAT adhesion results for both compounds. Experiments 10 and 11 are additional conditions that were added to the definitive screening design.

From the data of Table 4 the wind-up speed was found to be the most significant parameter. The wind-up speed had a strong impact on the thickness of the deposited coating and it is known that adhesion promoting interphases typically exhibit an optimum thickness for which adhesion is maximal. For this system, the slower the winding speed, the thicker the coating. However, the impact of the composition of the coating on adhesion is not reflected in the above model since the deposited coating results from a co-polymerization of two precursors with variable concentrations. Therefore, to further understand the importance of the chemistry of the coating, an additional model was built which takes into account the contribution of sulfur, acetylene as well as the residence time of the gases in the plasma zone.

To shed light on the importance of the coating chemistry, the following parameters were calculated and used as variables:

- Quantity of sulfur vapor flowing through the plasma zone during the time it takes for any single point on the wire to fully cross the 2" long plasma zone
- Quantity of acetylene flowing through the plasma zone during the time it takes for any single point on the wire to fully cross the 2" long plasma zone
- Residence time of gases in the plasma zone

Although the winding speed is not part of this analysis, it is intrinsically contained in the first two parameters since it was used to calculate the quantities of sulfur and acetylene. The quantity of sulfur was calculated from the above bubbler model and winding speed, while the residence time was obtained by taking into account the flow rates, tube inner diameter and cord diameter.

The above parameters were calculated and consigned in the Table 4 below. From Tables 3 and 4, a significant effect on adhesion is observed for the quantity of sulfur vapor flowing through the reactor during the time it takes for any single area of the wire to fully cross the plasma zone. The same analysis for the quantity of acetylene shows a marginal significance while the residence time of the gases in the plasma zone is not significant at all within the chosen design space. These results underline the importance of the coating chemistry since best rubber adhesion was obtained using a low flow of sulfur vapor and an intermediate amount of acetylene, although the latter parameter is of lesser importance. Ideally, the concentration of sulfur in the plasma coating should be close to the one in the compound to increase the affinity between the coating and the compound during vulcanization. Without wishing to be bound by any theory, it is postulated that the role of acetylene, beyond diluting the sulfur and improving the processing speed is to create a stronger and more stable carbon/sulfur network and to potentially participate to the vulcanization process via C=C double bonds created during the plasma polymerization of acetylene.

# Table 3

| Experiment | Main Argon flow L/min | Acetylene flow (ml/min) | Wind-up voltage (V) | Cobalt free wirecoat 1 | | | | Cobalt free wirecoat 2 | | | |
|---|---|---|---|---|---|---|---|---|---|---|---|
| | | | | Average TCAT pull-out force (N) | Pull-out force standard deviation (N) | Rubber coverage (%) | Pull-out Energy (J) | Average TCAT pull-out force (N) | Pull-out force standard deviation (N) | Rubber coverage (%) | Pull-out Energy (J) |
| **1** | 4.5 | 60 | 5 | 361 | 4 | 80 | 9.19 | 340 | 18 | 80 | 7.19 |
| **2** | 4.5 | 20 | 4 | 298 | 41 | 45 | 7.31 | 316 | 30 | 50 | 6.23 |
| **3** | 6 | 40 | 4 | 315 | 12 | 70 | 7.50 | 324 | 10 | 80 | 7.76 |
| **4** | 3 | 40 | 5 | 339 | 21 | 65 | 8.54 | 355 | 4 | 85 | 9.78 |
| **5** | 6 | 60 | 4.5 | 307 | 4 | 75 | 6.92 | 335 | 4 | 80 | 8.56 |
| **1 - Repeat** | 4.5 | 60 | 5 | 343 | 27 | 75 | 8.75 | 335 | 11 | 85 | 8.35 |
| *Vial refilled with Elemental Sulfur* | | | | | | | | | | | |
| **6** | 3 | 20 | 4.5 | 282 | 11 | 45 | 6.20 | 300 | 27 | 40 | 6.06 |
| **7** | 6 | 20 | 5 | 330 | 30 | 80 | 7.72 | 330 | 4 | 80 | 7.38 |
| **8** | 3 | 60 | 4 | 287 | 9 | 40 | 5.95 | 322 | 7 | 80 | 6.92 |
| **9** | 4.5 | 40 | 4.5 | 305 | 21 | 60 | 6.62 | 322 | 7 | 70 | 6.57 |
| **10** | 4.5 | 60 | 4.5 | 293 | 15 | 65 | 6.41 | 313 | 23 | 70 | 6.97 |
| **11** | 4.5 | 20 | 4.5 | 291 | 4 | 50 | 6.07 | 317 | 17 | 55 | 6.85 |
| **6 - Repeat** | 3 | 20 | 4.5 | 272 | 9 | 40 | 5.13 | 276 | 28 | 40 | 4.88 |

Table 4

| Experiment | Main Argon flow L/min | Acetylene flow (ml/min) | Wind-up voltage (V) | Corresponding wind-up speed (cm/s) | Sulfur vapor flow (ml/min) | Time for the wire to cross the 2" long plasma zone (s) | Sulfur vapor quantity (ml) | Acetylene quantity (ml) | Velocity of gases inside reactor (m/s) | Residence time of gases in the plasma (ms) |
|---|---|---|---|---|---|---|---|---|---|---|
| 1 | 4.5 | 60 | 5 | 1.21 | 13.7 | 1.65 | 0.376 | 1.1 | 4.531 | 11.212 |
| 2 | 4.5 | 20 | 4 | 0.75 | 13.7 | 2.66 | 0.456 | 1.332 | 6.756 | 7.519 |
| 3 | 6 | 40 | 4 | 0.75 | 13.7 | 2.66 | 0.376 | 1.65 | 6.786 | 7.486 |
| 4 | 3 | 40 | 5 | 1.21 | 13.7 | 1.65 | 0.607 | 1.772 | 8.982 | 5.656 |
| 5 | 6 | 60 | 4.5 | 1 | 13.7 | 2 | 0.607 | 2.658 | 4.560 | 11.139 |
| 1 - Repeat | 4.5 | 60 | 5 | 1.21 | 13.7 | 1.65 | 0.456 | 2 | 9.011 | 5.637 |
| *Vial refilled with Elemental Sulfur* | | | | | | | | | | |
| 6 | 3 | 20 | 4.5 | 1 | 13.7 | 2 | 0.456 | 0.666 | 4.501 | 11.286 |
| 7 | 6 | 20 | 5 | 1.21 | 13.7 | 1.65 | 0.607 | 0.886 | 6.727 | 7.552 |
| 8 | 3 | 60 | 4 | 0.75 | 13.7 | 2.66 | 0.376 | 0.55 | 8.952 | 5.675 |
| 9 | 4.5 | 40 | 4.5 | 1 | 13.7 | 2 | 0.376 | 1.65 | 6.786 | 7.486 |
| 10 | 4.5 | 60 | 4.5 | 1 | 13.7 | 2 | 0.456 | 2 | 6.786 | 7.486 |
| 11 | 4.5 | 20 | 4.5 | 1 | 13.7 | 2 | 0.456 | 0.666 | 6.727 | 7.552 |
| 6 - Repeat | 3 | 20 | 4.5 | 1 | 13.7 | 2 | 0.456 | 0.666 | 4.501 | 11.286 |

## Example 4

In this example, the effect of various aging conditions on adhesion of plasma treated tire cords is illustrated.

Original and aged adhesion in wire coat compound were determined for wires that were plasma coated respectively with sulfur/acetylene according to the three selected processing conditions as well as wires that were plasma coated with carbon disulfide/acetylene using typical coating conditions. Adhesion of both FN and FQ Brass references in a cobalt free wirecoat compound as well as a cobalt-containing wirecoat compound is also reported for comparison purposes.

Zinc electroplated 4+3x0.35 UT steel cord was used, following the treatment procedure described in Example 1.

Processing parameters for three selected elemental Sulfur/Acetylene plasma coating conditions are given in Table 5.

Table 6 summarizes the processing conditions used for the plasma coating deposition of a blend of carbon disulfide and acetylene on zinc-plated steel cords for comparison.

Elemental sulfur was purchased from Sigma-Aldrich with a purity of 99.5% - 100.5% plasma coated wires as well as reference brass steel cords were cured in TCAT blocks featuring an embedment length of 3/4" (19 mm) in two wirecoat compounds, the first cobalt-free and second containing cobalt.

The following suite of TCAT block aging conditions was selected to determine the impact on wire pull-out force and coverage:

4-day salt (90 C, 5% salt solution)
2-day steam (Autoclave, 121 C)
4-day steam (Autoclave, 121 C)
6-day humidity (85 C, 95% humidity)
12-day humidity (85 C, 95% humidity)
7-day air (70 C, oven aging)
2-day green aging (39 C, 98% humidity)

The following cure conditions were selected to assess the effect of cure temperature on adhesion:

35 min @ 155 C
21 min @ 170 C
51 min @ 140 C
50 min @ 155 C

Table 7 provides a summary of all original and aged adhesion results.

The following conclusions can be drawn in light of the above results:

- Overall, the CS2/acetylene plasma coated wire exhibit a lower adhesion across the different cure and aging conditions compared to the sulfur/acetylene plasma coated wires. However, for the higher cure temperature, it is interesting to notice a lower pull-out force compared to sulfur/acetylene coated wires while the rubber coverage is about equal. This could indicate that the compound has a tendency to tear more easily in the vicinity of the CS2/acetylene plasma coating.
- All three sulfur/acetylene plasma coating conditions show rubber adhesion about equal to brass in the cobalt-free compound for both standard and elevated cure temperatures. However, adhesion after salt aging improves for the elevated cure compared to the standard cure. On the other hand, the lower cure temperature exhibits a significant adhesion difference between the brass references and all plasma coated wires. Therefore, the cure temperature seems to be an important parameter for reaching the adequate level of adhesion.
- For brass references, the effect of the presence or absence of cobalt salts on adhesion is not so straightforward when comparing results for the cobalt-free and cobalt-containing compounds. The pull-out force is typically higher for the cobalt containing compound because of the higher compound stiffness.

**Table 5**

| Processing parameters | Sulfur/Acetylene plasma coating conditions | | |
|---|---|---|---|
| | **Condition #1** | **Condition #2** | **Condition #3** |
| Quartz reactor tube diameter ID/OD (mm) | 4/6 | | |
| Electrode length (") | 1 | | |
| Wind-up speed (cm/s) | ~ 1.35 cm/s | | |

(continued)

| **Processing parameters** | **Sulfur/Acetylene plasma coating conditions** | | |
|---|---|---|---|
| | **Condition #1** | **Condition #2** | **Condition #3** |
| Plasma power (W) | 20 | 40 | 20 |
| Plasma frequency (kHz) | | ~ 54 kHz | |
| Sulfur evaporator temperature (Celsius) | 250 | 250 | 300 |
| Argon flow through the Sulfur-containing vial (SLM) | 1 | 1 | 0.2 |
| Main Argon flow through the reactor (SLM) | 4.5 | 4.5 | 4.5 |
| Acetylene flow through the reactor (SCCM) | 40 | 40 | 60 |

**Table 6**

| **Processing parameters for Carbon Disulfide/Acetylene Plasma coating deposition** | |
|---|---|
| Quartz reactor tube diameter ID/OD (mm) | 4/6 |
| Electrode length (") | 1 |
| Wind-up speed (cm/s) | ~ 1.1 |
| Plasma power (W) | 80 |
| Plasma frequency (kHz) | ~ 20-22 kHz |
| CS2 flow rate (Microliters/min) | 61 |
| Argon precursor carrier gas flow rate (SLM) | 0.8 |
| Main Argon flow through the reactor (SLM) | 2.5 |
| Acetylene flow through the reactor (SCCM) | 16 |

**Table 7**

| Cure Conditions | | | | Original Adhesion | | 4-day Salt | | 2-day Steam | | 6-day Humidity | | 12-day Humidity | | 7-day Air | |
|---|---|---|---|---|---|---|---|---|---|---|---|---|---|---|---|
| Wire Identification | Plasma Coating condition | Cure | Compound | Average Pull-Out Force (N) | Rubber Coverage (%) | Average Pull-Out Force (N) | Rubber Coverage (%) | Average Pull-Out Force (N) | Rubber Coverage (%) | Average Pull-Out Force (N) | Rubber Coverage (%) | Average Pull-Out Force (N) | Rubber Coverage (%) | Average Pull-Out Force (N) | Rubber Coverage (%) |
| Sulfur/$C_2H_2$ plasma coated wire | #1 | 51' 140 C | Cobalt-free | 468 | 20 | 206.5 | 10 | 576 | 85 | 633 | 80 | Conditions not tested | | | |
| | #2 | | | 426.5 | 10 | 278 | 10 | 561.5 | 80 | 584 | 60 | | | | |
| | #3 | | | 427 | 10 | 196 | 10 | 573.5 | 85 | 617.5 | 65 | | | | |
| Reference $CS_2/C_2H_2$ plasma coated wire | N/A | | | 501.5 | 60 | 246.5 | 10 | 486 | 50 | 550.5 | 65 | | | | |
| Brass | N/A | | | 726.5 | 90 | 429.5 | 30 | 722.5 | 75 | 648.5 | 55 | | | | |
| Brass | N/A | | With Cobalt | 792 | 85 | 503.3 | 25 | 712.5 | 70 | | | 735.5 | 60 | | |
| Sulfur/$C_2H_2$ plasma coated wire | #1 | 35' 155 C | Cobalt-free | 584.5 | 80 | 287 | 10 | 547 | 85 | 621.5 | 75 | 583.5 | 70 | 700.5 | 85 |
| | #2 | | | 556 | 75 | 423.5 | 20 | 517.5 | 75 | 659.5 | 70 | 617.5 | 80 | 677 | 85 |
| | #3 | | | 553.5 | 80 | 301 | 10 | 533.5 | 80 | 632 | 80 | 612 | 75 | 694 | 85 |
| Reference $CS_2/C_2H_2$ plasma coated wire | N/A | | | 499.5 | 60 | 150.5 | 10 | 450.5 | 45 | 606 | 70 | 554.5 | 60 | 556.5 | 65 |
| Brass | N/A | | | 520.5 | 65 | 446.5 | 25 | 624 | 50 | 589 | 55 | 639.5 | 45 | 644 | 50 |
| Brass | N/A | | With Cobalt | 761.8 | 90 | 499.2 | 30 | 646.4 | 60 | 581.3 | 55 | 711 | 45 | 734.3 | 70 |

(continued)

| Cure Conditions | | | | Original Adhesion | | 4-day Salt | | 2-day Steam | | 6-day Humidity | | 12-day Humidity | | 7-day Air | |
|---|---|---|---|---|---|---|---|---|---|---|---|---|---|---|---|
| Wire Identification | Plasma Coating condition | Cure | Compound | Average Pull-Out Force (N) | Rubber Coverage (%) | Average Pull-Out Force (N) | Rubber Coverage (%) | Average Pull-Out Force (N) | Rubber Coverage (%) | Average Pull-Out Force (N) | Rubber Coverage (%) | Average Pull-Out Force (N) | Rubber Coverage (%) | Average Pull-Out Force (N) | Rubber Coverage (%) |
| Sulfur/$C_2H_2$ plasma coated wire | #1 | 21' 170 C | Cobalt-free | 566 | 75 | 533 | 60 | 521 | 80 | 648 | 75 | 695.5 | 90 | Conditions not tested | |
| | #2 | | | 575.5 | 80 | 565 | 60 | 572 | 80 | 601 | 75 | 649.5 | 80 | | |
| | #3 | | | 562 | 80 | 547.5 | 50 | 532 | 80 | 684 | 75 | 581 | 75 | | |
| Reference $CS_2/C_2H_2$ plasma coated wire | N/A | | | 485 | 80 | 551 | 65 | 407.5 | 40 | 589.5 | 80 | 527 | 75 | | |
| Brass | N/A | | | 434 | 30 | 465.5 | 20 | 584.5 | 75 | | | 656 | 80 | | |
| Brass | N/A | | With Cobalt | 733.8 | 90 | 629.8 | 60 | 666.8 | 70 | | | 750.3 | 70 | | |

## Claims

1. A method of making a cord reinforced rubber article, the method comprising the steps of:

    a) mixing a carrier gas (18, 19), sulfur and an alkyne (17), to form a gas mixture (21);
    b) generating an atmospheric pressure plasma (24) from the gas mixture (21);
    c) exposing a reinforcement cord (26) to the atmospheric pressure plasma (24) to produce a treated reinforcement cord (28); and
    d) contacting the treated reinforcement cord (28) with a rubber composition comprising a diene based elastomer.

2. The method of claim 1, wherein the cord (26) is selected from the group consisting of polyamide, polyester, polyketone, rayon, and polyaramid cords.

3. The method of claim 1, wherein the reinforcement cord (26) is selected from the group consisting of steel, galvanized steel, zinc plated steel and brass plated steel cords.

4. The method of claim 1, 2 or 3, wherein the alkyne (17) is acetylene.

5. The method of at least one of the previous claims, wherein the rubber composition is exclusive of cobalt.

6. The method of at least one of the previous claims, wherein the sulfur and the alkyne (17) are present in a volume ratio of sulfur/alkyne in a range of from 0.01 to 0.1.

7. The method of at least one of the previous claims, wherein the sulfur and alkyne (17) are present in a ratio (total sulfur + alkyne)/carrier gas in a range of from 0.1 to 5 percent by volume.

8. The method of claim 7, wherein the sulfur and alkyne (17) are present in a ratio (total sulfur + alkyne)/carrier gas in a range of from 0.1 to 1 percent by volume.

9. The method of at least one of the previous claims, wherein the reinforcement cord (26) is conveyed continuously during exposure to the atmospheric pressure plasma (24).

10. The method of at least one of the previous claims, wherein the carrier gas (18, 19) is selected from the group consisting of argon, helium, neon, xenon, nitrogen, carbon dioxide, nitrous oxide, carbon monoxide, and air.

11. A treated reinforcement cord manufactured by:

    a) mixing a carrier gas (18, 19), sulfur and an alkyne (17), to form a gas mixture (21);
    b) generating an atmospheric pressure plasma (24) from the gas mixture (21);
    c) exposing a reinforcement cord (26) to the atmospheric pressure plasma (24) thereby producing the treated reinforcement cord (28).

12. The treated reinforcement cord of claim 11 wherein the reinforcement cord (26) is a metallic reinforcement cord.

13. A reinforced rubber or reinforced elastomer article of manufacture comprising the treated reinforcement cord (28) of claim 11 or 12.

14. The article of manufacture of claim 13, wherein the article is a pneumatic tire.

15. The article of manufacture of claim 13 selected from the group consisting of hoses, transmission belts, drive belts, air springs, conveyor belts, and drive tracks.

## Patentansprüche

1. Verfahren zum Herstellen eines kordverstärkten Kautschukartikels, wobei das Verfahren die folgenden Schritte umfasst:

(a) Mischen eines Trägergases (18, 19), Schwefels und eines Alkins (17), um ein Gasgemisch (21) auszubilden;
(b) Erzeugen eines Atmosphärendruckplasmas (24) aus dem Gasgemisch (21);
(c) Aussetzen eines Verstärkungskords (26) dem Atmosphärendruckplasma (24), um einen behandelten Verstärkungskord (28) zu produzieren; und
(d) Inberührungbringen des behandelten Verstärkungskords (28) mit einer Kautschukzusammensetzung, umfassend ein Elastomer auf Dienbasis.

**2.** Verfahren nach Anspruch 1, wobei der Kord (26) aus der Gruppe bestehend aus Polyamid-, Polyester-, Polyketon-, Rayon- und Polyaramidkorden ausgewählt ist.

**3.** Verfahren nach Anspruch 1, wobei der Verstärkungskord (26) aus der Gruppe bestehend aus Stahl-, verzinkten Stahl-, zinkplattierten Stahl- und messingplattierten Stahlkorden ausgewählt ist.

**4.** Verfahren nach einem der Ansprüche 1, 2 oder 3, wobei das Alkin (17) Acetylen ist.

**5.** Verfahren nach wenigstens einem der vorhergehenden Ansprüche, wobei die Kautschukzusammensetzung ohne Kobalt ist.

**6.** Verfahren nach wenigstens einem der vorhergehenden Ansprüche, wobei der Schwefel und das Alkin (17) in einem Volumenverhältnis von Schwefel/Alkin in einem Bereich von 0,01 bis 0,1 vorhanden sind.

**7.** Verfahren nach wenigstens einem der vorhergehenden Ansprüche, wobei der Schwefel und das Alkin (17) in einem Verhältnis (Gesamtschwefel + Alkin)/Trägergas in einem Bereich von 0,1 bis 5 Vol.-% vorhanden sind.

**8.** Verfahren nach Anspruch 7, wobei der Schwefel und das Alkin (17) in einem Verhältnis (Gesamtschwefel + Alkin)/Trägergas in einem Bereich von 0,1 bis 1 Vol.-% vorhanden sind.

**9.** Verfahren nach wenigstens einem der vorhergehenden Ansprüche, wobei der Verstärkungskord (26) während der Einwirkung des Atmosphärendruckplasmas (24) kontinuierlich gefördert wird.

**10.** Verfahren nach wenigstens einem der vorhergehenden Ansprüche, wobei das Trägergas (18, 19) aus der Gruppe bestehend aus Argon, Helium, Neon, Xenon, Stickstoff, Kohlendioxid, Stickstoffoxid, Kohlenmonoxid und Luft ausgewählt ist.

**11.** Behandelter Verstärkungskord, angefertigt durch:

(a) Mischen eines Trägergases (18, 19), Schwefels und eines Alkins (17), um ein Gasgemisch (21) auszubilden;
(b) Erzeugen eines Atmosphärendruckplasmas (24) aus dem Gasgemisch (21);
(c) Aussetzen eines Verstärkungskords (26) dem Atmosphärendruckplasma (24), wodurch ein behandelter Verstärkungskord (28) produziert wird.

**12.** Behandelter Verstärkungskord nach Anspruch 11, wobei der Verstärkungskord (26) ein metallischer Verstärkungskord ist.

**13.** Verstärktes Kautschuk- oder verstärktes Elastomeranfertigungserzeugnis, umfassend den behandelten Verstärkungskord (28) nach Anspruch 11 oder 12.

**14.** Anfertigungserzeugnis nach Anspruch 13, wobei das Erzeugnis ein pneumatischer Reifen ist.

**15.** Anfertigungserzeugnis nach Anspruch 13, ausgewählt aus der Gruppe bestehend aus Schläuchen, Treibriemen, Antriebsriemen, Luftfedern, Transportbändern und Antriebsschienen.

## Revendications

**1.** Procédé de fabrication d'un article en caoutchouc renforcé par des câblés, le procédé comprenant les étapes consistant à :

a) mélanger un gaz porteur (18, 19), du soufre et un alcyne (17) pour obtenir un mélange gazeux (21) ;
b) générer un plasma sous pression atmosphérique (24) à partir du mélange gazeux (21) ;
c) exposer un câblé de renforcement (26) au plasma sous pression atmosphérique (24) pour ainsi obtenir un câblé de renforcement traité (28) ; et
d) mettre le câblé de renforcement traité (28) en contact avec une composition de caoutchouc contenant un élastomère à base diénique.

**2.** Procédé selon la revendication 1, dans lequel le câblé (26) est choisi parmi le groupe constitué par des câblés de polyamide, de polyester, de polycétone, de rayonne et de polyaramide.

**3.** Procédé selon la revendication 1, dans lequel le câblé de renforcement (26) est choisi parmi le groupe constitué par des câblés en acier, en acier galvanisé, en acier plaqué au zinc et en acier plaqué au laiton.

**4.** Procédé selon la revendication 1, 2 ou 3, dans lequel l'alcyne (17) représente de l'acétylène.

**5.** Procédé selon au moins une des revendications précédentes, dans lequel la composition de caoutchouc ne contient pas de cobalt.

**6.** Procédé selon au moins une des revendications précédentes, dans lequel le soufre et l'alcyne (17) sont présents dans un rapport volumique soufre/alcyne dans une plage de 0,01 à 0,1.

**7.** Procédé selon au moins une des revendications précédentes, dans lequel le soufre et l'alcyne (17) sont présents dans un rapport (soufre total + alcyne)/gaz porteur dans une plage de 0,1 à 5 % en volume.

**8.** Procédé selon la revendication 7, dans lequel le soufre et l'alcyne (17) sont présents dans un rapport (soufre total + alcyne)/gaz porteur dans une plage de 0,1 à 1 % en volume.

**9.** Procédé selon au moins une des revendications précédentes, dans lequel le câblé de renforcement (26) est transporté en continu au cours de son exposition au plasma sous pression atmosphérique (24).

**10.** Procédé selon au moins une des revendications précédentes, dans lequel le gaz porteur (18, 19) est choisi parmi le groupe constitué par l'argon, l'hélium, le néon, le xénon, l'azote, le dioxyde de carbone, le protoxyde d'azote, le monoxyde de carbone et l'air.

**11.** Câblé de renforcement traité fabriqué par le fait de :

a) mélanger un gaz porteur (18, 19), du soufre et un alcyne (17) pour obtenir un mélange gazeux (21) ;
b) générer un plasma sous pression atmosphérique (24) à partir du mélange gazeux (21) ; et
c) exposer un câblé de renforcement (26) au plasma sous pression atmosphérique (24) pour ainsi obtenir un câblé de renforcement traité (28).

**12.** Câblé dans forcement traité selon la revendication 11, dans lequel le câblé de renforcement (26) représente un câblé de renforcement de type métallique.

**13.** Caoutchouc renforcé ou article élastomère manufacturé renforcé comprenant le câblé de renforcement traité (28) selon la revendication 11 ou 12.

**14.** Article manufacturé selon la revendication 13, dans lequel l'article représente un bandage pneumatique.

**15.** Article manufacturé selon la revendication 13, choisi parmi le groupe constitué par des tuyaux flexibles, des courroies de transmission, des courroies d'entraînement, des ressorts pneumatiques, des courroies transporteuses et des chenilles d'entraînement.

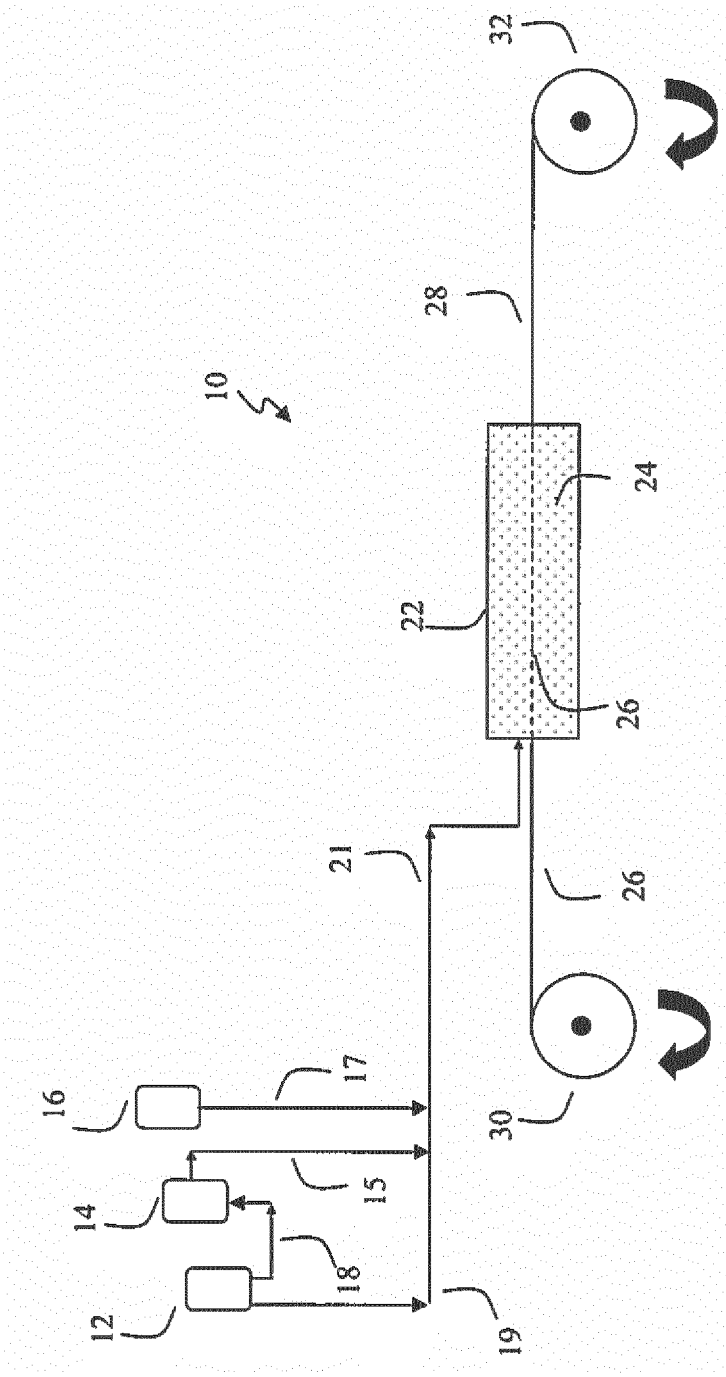


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6664737 B
- US 9255330 B
- US 8927052 B
- US 20100028561 A
- US 20090148615 A
- US 20070202270 A
- US 6605670 A
- US 6541551 A
- US 6472457 A
- US 5945500 A
- US 5936056 A
- US 5688871 A
- US 5665799 A
- US 5504127 A
- US 5405897 A
- US 5244725 A
- US 5206289 A
- US 5194513 A
- US 5030692 A
- US 4889481 A
- US 4605696 A
- US 4436853 A
- US 4092455 A


### Non-patent literature cited in the description


- Vanderbilt Rubber Handbook. 1990, 343-362
- Vanderbilt Rubber Handbook. 1990, 363-367
- **NICHOLSON et al.** *Tire Science and Technology, TSTCA,* May 1978, vol. 6 (2), 114-124